# EUROPÄISCHE PATENTSCHRIFT

(11) **EP 0 480 091 B1**
(45) Veröffentlichungstag und Bekanntmachung des Hinweises auf die Patenterteilung: **29.12.1993**
(21) Anmeldenummer: 90119545.3
(22) Anmeldetag: 12.10.1990
(51) Int. Cl.: B23H 7/10

(54) **Vorrichtung zum Drahterodieren mit einer Werkzeugfräsmaschine**
Wire machining apparatus for a milling machine tool
Appareillage d'usinage par fil d'une machine-outil de fraisage

(43) Veröffentlichungstag der Anmeldung: 15.04.1992
(73) Patentinhaber: Nennhuber, Johannes, D-90459 Nürnberg (DE)
(72) Erfinder: Nennhuber, Johannes, D-90459 Nürnberg (DE)
(74) Vertreter: LOUIS, PÖHLAU, LOHRENTZ & SEGETH

(56) Entgegenhaltungen:
- EP-A- 0 076 661
- EP-A- 0 328 682
- CH-A- 641 991
- PATENT ABSTRACTS OF JAPAN vol. 12, no. 208 (M-709)(3055) 15 Juni 1988,& JP-A-63 11235 (INOUE JAPAX RES INC) 18 Januar 1988,

## Beschreibung

Die Erfindung betrifft eine Vorrichtung zum Drahterodieren mit einer NC-, CNC-, Kopier- oder Gravierkopierfräsmaschine, d.h. eine Vorrichtung, welche das Drahterodieren in Verbindung mit jeder konventionellen Senkerodiermaschine ermöglicht.

Es ist bekannt, dass zum Drahterodieren (bzw. Drahtschneiden) eine spezielle Maschine (Drahterodiermaschine) zur Verwendung kommt, die nur zu diesem Zweck benutzt werden kann. Um diese Maschine rentabel auszulasten, muss sie fast rund um die Uhr in Betrieb sein. Da diese Voraussetzung bei sehr vielen metallverarbeitenden Firmen nicht gegeben ist, muss auf diese Maschine verzichtet werden, obwohl sie oft von ausserordentlicher Wichtigkeit in der Metallbearbeitung ist.

Da nahezu in jedem metallverarbeitenden Betrieb eine Senkerodiermaschine und eine NC-, CNC-Fräsmaschine, oder zumindest eine Kopierfräsmaschine bzw. eine Gravierkopierfräsmaschine vorhanden ist, liegt der Erfindung die Aufgabe zugrunde, eine Vorrichtung der eingangs genannten Art zu schaffen, die unter Zuhilfenahme einer dieser üblichen Maschinen das Drahterodieren, d.h. das Drahtschneiden ermöglicht.

Diese Aufgabe wird bei einer Vorrichtung der eingangs genannten Art erfindungsgemäss durch die Merkmale des kennzeichnenden Teiles des Anspruchs 1 gelöst. Weiterbildungen der erfindungsgemässen Vorrichtung sind in den Unteransprüchen gekennzeichnet.

Weitere Einzelheiten, Merkmale und Vorteile ergeben sich aus der nachfolgenden Beschreibung eines in der Zeichnung schematisch dargestellten Ausführungsbeispiels der erfindungsgemässen Vorrichtung. Es zeigt:
- Fig. 1: eine schematische Darstellung der Vorrichtung, und
- Fig. 2: eine Blockdarstellung und die elektrischen Anschlüsse der Vorrichtung in Kombination mit einer herkömmlichen Fräsmaschine.

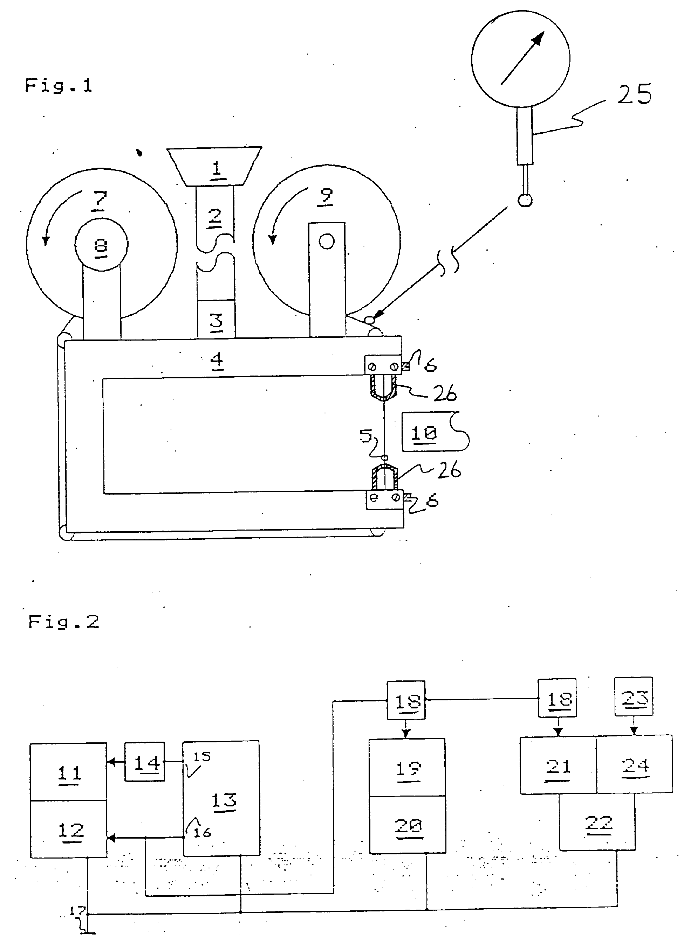

Die in Fig. 2 mit der Bezugsziffer 18 bezeichnete Vorrichtung besteht -wie aus Fig. 1 ersichtlich ist- aus einem U-förmigen Bügel 4, der mit dem Aufnahmedorn 2 in jedes gängige Spannfutter 1 (das sich am Fräsmaschinenkopf 19 und am Kopierfräsmaschinenkopf Frästeil 21 befindet) einer NC-, CNC-Fräsmaschine 19, 20 oder einer Kopierfräsmaschine bzw. Gravierkopierfräsmaschine 21, 22, 24 gespannt werden kann. Der Aufnahmedorn 2 ist gegenüber der Vorrichtung mittels einer Isolierung 3 elektrisch isoliert. Auf dem Bügel 4 befindet sich sowohl eine gebremste Spule 9 mit dem Erodierdraht 5, als auch eine Leerspule 7, die den benutzten Erodierdraht mit Hilfe eines Elektromotors 8 auf die Leerspule aufwickelt. Der Erodierdraht 5 läuft an einer Druckkraft-Messeinrichtung 25 vorbei und über Umlenkrollen durch zwei Einstellvorrichtungen 6, die an den beiden Enden des U-förmigen Bügels 4 angebracht sind. Die Druckkraft-Messeinrichtung 25 dient u.a. dazu, den Antrieb für den Erodierdraht 5 derart zu steuern bzw. gegebenenfalls zu bremsen, dass die Spannung des Erodierdrahtes 5 konstant ist. Die beiden Einstellvorrichtungen 6 dienen dazu, den Erodierdraht senkrecht zum Maschinentisch ausrichten zu können. Bei Kopierfräsmaschinen bzw.
Gravierkopierfräsmaschinen wird ein Taster 23 (sh.Fig. 2), falls er keinen eigenständigen Antrieb besitzt, über einen Computer, ein CAD Programm und einen gesteuerten Kreuztisch, der auf den Maschinentisch einer Abtasteinheit 24 montiert wird, bewegt. Elektrisch angeschlossen wird die Vorrichtung bei der Senkerodiermaschine 11, 12, 13 an ein Impulskabel 16, das von einem Generator 13 zu einem Arbeitsbecken 12 führt. Die Steuerleitung 15, die zum Kopf 11 der Erodiermaschine führt, wird durch einen Ein-Aus-Schalter 14 unterbrochen, wenn man Drahterodieren (Drahtschneiden) will. Die Masse 17 , die an der Senkerodiermaschine 11, 12, 13 anliegt, wird auch an den Maschinentisch 20 der NC-, CNC-Fräsmaschine 19, 20 oder an den Maschinentisch 22 der Kopierfräsmaschine bzw. der Gravierkopierfräsmaschine 21, 22, 24 angeschlossen. Ein (nicht gezeichneter) gesonderter Behälter, in dem sich das Dielektrikum befindet, wird jeweils neben die Werkzeugmaschine, mit der man Drahtschneiden (Drahterodieren) will, gestellt. Über eine (nicht dargestellte) Pumpe wird das Dielektrikum durch Düsen 26 zum Erodierdraht 5 und zum Werkstück 10 gepumpt und über einen Ablauf am Werkzeugmaschinentisch in den Behälter zurückgeleitet. Ein Kühlaggregat kann zur Kühlung des Dielektrikums vorgesehen sein.

Die mit der Erfindung erzielten Vorteile bestehen insbes. darin, dass das Drahterodieren (Drahtschneiden) für jeden Betrieb erschwinglich ist und zudem noch eine effektivere Auslastung der vorhandenen Maschinen gewährleistet ist.

## Patentansprüche

1. Vorrichtung (18) zum Drahterodieren mit NC-, CNC-, Kopier- bzw. Gravierkopierfräsmaschinen, die einen U-förmigen Bügel (4) und einen Aufnahmedorn (2) für ein Spannfutter (1) einer NC-, CNC-, Kopier- oder Gravierkopierfräsmaschine aufweist, der vom Bügel (4) mittels einer elektrischen Isolierung (3) elektrisch isoliert ist, dass auf dem Bügel (4) eine Lagerspule (9) für ungebrauchten neuen Erodierdraht (5) und eine mittels einer Antriebseinrichtung (8) antreibbare Aufnahmespule (7) für benutzten Erodierdraht (5) vorgesehen ist, dass an den Eckenbereichen des Bügels (4) Umlenkrollen für den Erodierdraht (5) gelagert sind, der von der Lagerspule (9) abgewickelt und der auf die Aufnahmespule (7) aufgewickelt wird, und dass zu dem in bezug auf einen Maschinentisch lotrechten Ausrichten des zwischen den beiden Schenkeln des Bügels (4) verlaufenden Abschnittes des Erodierdahtes (5) am Bügel (4) Einstellvorrichtungen (6) vorgesehen sind.

2. Vorrichtung nach Anspruch 1,
**dadurch gekennzeichnet,**
dass die Lagerspule (9) mit einer Bremse ausgebildet ist.

3. Vorrichtung nach Anspruch 1,
**dadurch gekennzeichnet,**
dass die Einstellvorrichtungen (6) an den vorderen Endabschnitten der Schenkel des U-förmigen Bügels (4) vorgesehen sind.

4. Vorrichtung nach einem der vorhergehenden Ansprüche,
**dadurch gekennzeichnet,**
dass zur Messung der Drahtspannung des Erodierdrahtes (5) eine Messeinrichtung (25) vorgesehen ist.

5. Vorrichtung nach Anspruch 4,
**dadurch gekennzeichnet,**
dass die Messeinrichtung (25) eine Druckkraft-Messeinrichtung ist.

6. Vorrichtung nach einem der vorhergehenden Ansprüche,
**dadurch gekennzeichnet,**
dass an mindestens einem Endabschnitt des Bügels (4) zum Umströmen des Erodierdrahtes (5) und des Werkstückes (10) mit Dielektrikum Düsen (26) vorgesehen sind.

## Claims

1. An apparatus (18) for wire machining with NC and CNC machines, copying milling machines or engraving copying milling machines, which has a U-shaped stirrup (4) and a holding arbor (2) for a chuck (1) of an NC, CNC, copying or engraving copying milling machine, which arbor is electrically insulated from the stirrup (4) by means of an electric insulation (3), wherein on the stirrup (4), provision is made for a stock reel (9) for unused fresh electromachining wire (5) and a take-up reel (7) for the used electromachining wire (5), which is drivable by means of a drive device (8), wherein in the corner zones of the stirrup (4), there are mounted guide rollers for the electromachining wire (5) which is wound off from the stock reel (9) and wound up onto the take-up reel (7), and wherein for the perpendicular orientation relative to a machine table, of the section of the electromachining wire (5) extending between the two sides of the stirrup (4), provision is made on the stirrup (4) for adjustment devices (6).

2. A device according to claim 1,
**characterized in that**
the stock reel (9) is designed with a brake.

3. A device according to claim 1,
**characterized in that**
the adjustment devices (6) are provided at the front end sections of the sides of the U-shaped stirrup (4).

4. A device according to one of the preceding claims,
**characterized in that**
for measuring the wire tension of the electromachining wire (5), provision is made for a measuring device (25).

5. A device according to claim 4,
**characterized in that**
the measuring device (25) is a pressure measuring device.

6. A device according to one of the preceding claims,
**characterized in that**
provision is made on at least one end section of the stirrup (4) for nozzles (26) for causing a dielectric to flow round the electromachining wire (5) and the workpiece (10).

## Revendications

1. Appareillage (18) pour l'usinage par fil au moyen de machines à copier ou à graver par fraisage au NC - ou au CNC -, cet appareillage comportant un étrier (4) en forme de U et une broche de réception (2) pour un mandrin (1) d'une machine à copier ou à graver par fraisage au NC - ou au CNC - et étant isolé électriquement de l'étrier au moyen d'une isolation électrique (3), ledit appareillage étant équipé sur l'étrier (4) d'une poulie de stockage (9) pour le fil d'usinage (5) neuf non utilisé et d'une poulie de reprise (7) pouvant être entraînée au moyen d'un dispositif d'entraînement (8) pour le fil d'usinage (5) utilisé, des galets de guidage pour le fil d'usinage (5) étant disposés dans les zones angulaires de l'étrier (4), ledit fil d'usinage se déroulant depuis la poulie de stockage (9) et s'enroulant sur la poulie de reprise (7), et des dispositifs de réglage (6) étant prévus sur l'étrier (4) pour l'alignement vertical par rapport au plateau de la machine de la portion du fil d'usinage (5) cheminant entre les deux branches de l'étrier (4).

2. Appareillage selon la revendication 1, caractérisé en ce que la poulie de stockage (9) comporte un frein.

3. Appareillage selon la revendication 1, caractérisé en ce que les dispositifs de réglage (6) sont prévus sur les sections terminales avant des branches de l'étrier (4) en forme de U.

4. Appareillage de l'une des revendications précédentes, caractérisé en ce que, en vue de la mesure de la tension du fil d'usinage (5), il est prévu un dispositif de mesure (25).

5. Appareillage selon la revendication 4, caractérisé en ce que le dispositif de mesure (25) est un dispositif de mesure de la force de pression.

6. Appareillage selon l'une des revendications précédentes, caractérisé en ce que sur au moins l'une des sections terminales de l'étrier (4) sont prévues des buses (26) en matériau diélectrique pour la déviation du fil d'usinage (5) et de la pièce à usiner (10).
